# EUROPEAN PATENT APPLICATION

(11) **EP 4 604 222 A1**
(43) Date of publication of application: **20.08.2025**
(21) Application number: 23877214.9
(22) Date of filing: 04.10.2023
(51) Int. Cl.: H01M 4/86, H01M 8/10

(54) **ELECTRODE CATALYST LAYER, MEMBRANE ELECTRODE ASSEMBLY AND POLYMER ELECTROLYTE FUEL CELL**

(30) Priority: 14.10.2022 JP 2022165761
(71) Applicant: Toppan Holdings Inc., Tokyo 110-0016 (JP)
(72) Inventor: UENO, Masahiro, Tokyo 110-0016 (JP); SUZUKI, Yutaka, Tokyo 110-0016 (JP)
(74) Representative: Hoffmann Eitle
(86) International application number: PCT/JP2023/036260
(87) International publication number: WO 2024/080209

(57) **Abstract**

The present disclosure provides an electrocatalyst layer 20 that is usable in contact with a polyelectrolyte membrane, including catalyst-supporting particles 21, polyelectrolyte 22 containing fluorine atoms, and two or more types of fibrous materials, wherein the catalyst-supporting particles 21 each contain a support and a catalyst supported by the support; the fibrous materials contain at least one type of a conductive fibrous material 23 and at least one type of a non-conductive fibrous material 24; and when a content of the supports is 100 parts by mass, a content of the conductive fibrous material 23 is 5 parts by mass or more and 50 parts by mass or less, and a content of the non-conductive fibrous material 24 is 5 parts by mass or more and 20 parts by mass or less.

## Description

### [Technical Field]

The present invention relates to electrocatalyst layers, membrane electrode assemblies, and polymer electrolyte fuel cells.

### [Background Art]

Demand for generating cleaner energy is growing as a measure to reduce the ever-increasing burden on the global environment. Fuel cells are power generation systems that generate electrical energy through a chemical reaction between hydrogen and oxygen and emit only water, and there are high expectations for fuel cells as a future energy source.

Fuel cells are classified into alkaline, phosphoric acid, solid polymer, molten carbonate, solid oxide, and other types, according to the type of the electrolyte. Since polymer electrolyte fuel cells can be used near room temperature, they are expected to find a wide range of applications, such as in-vehicle power sources and household stationary power sources. For this reason, research and development are being actively pursued towards practical application of polymer electrolyte fuel cells, on improvement of power generation performance and durability, reduction of cost, and the like.

Such a polymer electrolyte fuel cell is provided with a polyelectrolyte membrane having proton conductivity, a fuel electrode serving as an anode, and an air electrode serving as a cathode. The polyelectrolyte membrane is sandwiched between the fuel electrode and the air electrode in the thickness direction of the polyelectrolyte membrane. The fuel electrode has an electrocatalyst layer that separates the fuel gas into protons and electrons. The air electrode has an electrocatalyst layer that oxidizes the protons transported through the polyelectrolyte membrane with an oxidant containing oxygen and receives electrons from external circuits. The electrocatalyst layers of the fuel electrode and the air electrode contain a catalytic material such as a platinum-based noble metal, supports for supporting the catalytic material, and a polyelectrolyte.

Such a polymer electrolyte fuel cell is a laminate of a plurality of unit cells each having a basic configuration in which surfaces of the electrocatalyst layers of the fuel electrode and the air electrode facing away from the polyelectrolyte membrane are each provided with a gas diffusion layer and a separator. The gas diffusion layers are layers having electrical conductivity and uniformly diffusing the reaction gas. The separators have gas flow channels and cooling water channels and function as members for extracting electrons to external circuits. Hereinafter, the polyelectrolyte membrane provided with a fuel electrode and an air electrode formed on both sides thereof will be referred to as a membrane electrode assembly.

In the polymer electrolyte fuel cell, a fuel gas containing hydrogen is supplied to the fuel electrode and an oxidant gas containing oxygen is supplied to the air electrode to respectively cause electrode reactions shown in the following Formulas 1 and 2 in the fuel electrode and the air electrode for generation of power.

Fuel electrode: H₂ → 2H⁺ + 2e⁻... (Formula 1)

Air electrode: 1/2O₂ + 2H⁺ + 2e⁻ → H₂O... (Formula 2)

As shown in Formula 1, the fuel gas supplied to the fuel electrode is separated into protons and electrons due to the catalytic material contained in the electrocatalyst layer of the fuel electrode. The separated protons migrate through the humidified polyelectrolyte contained in the electrocatalyst layer of the fuel electrode and through the polyelectrolyte membrane to the air electrode. The separated electrons are extracted from the fuel electrode to the external circuits, pass through the external circuits, and move to the air electrode. In the air electrode, as shown in Formula 2, the oxidant gas reacts with the protons and electrons, which have migrated from the fuel electrode, to produce water. Due to the passage of electrons through the external circuits, an electrical current is generated.

The electrocatalyst layers of fuel cells are generally formed with a thickness of 100 µm or less and this raises an issue of cracks occurring in the electrocatalyst layers when they are produced. Occurrence of cracks may interrupt the proton conduction path or the electron conduction path in the electrocatalyst layers and may deteriorate power generation performance or durability. To solve this issue, there is known a technique for improving the bonding strength of the electrocatalyst layers as disclosed in PTL 1.

In PTL 1, the bonding strength of the electrocatalyst layers is improved by adding a fibrous material such as a hydrophilic carbon whisker.

### [Citation List]

### [Patent Literature]

PTL 1: JP4065862B

### [Summary of the Invention]

### [Technical Problem]

However, the fuel cell based on the conventional art using the electrocatalyst layers disclosed in PTL 1 has room for improvement in terms of initial power generation performance and durability.

If a fibrous material is added to the electrocatalyst layers, protons cannot be conducted on the fibrous material, and therefore may increase the proton conduction resistance in the electrode catalyst layers, which may result in a decrease in power generation performance of the membrane electrode assembly. In particular, under low humidity conditions, water content of the polyelectrolyte decreases, which may result in a significant increase in proton conduction resistance.

However, if the ratio of the polyelectrolyte is increased in the electrocatalyst layers in order to improve proton conductivity, electron conductivity in the electrocatalyst layers is not necessarily ensured, or water discharged during power generation at high current density cannot be necessarily expelled from the system due to the polyelectrolyte retaining water.

For this reason, while keeping the amount of polyelectrolyte in the catalyst layer small, it is necessary to maintain the power generation performance. Therefore, it is important to appropriately constitute an electron conduction path and a proton conduction path in the electrocatalyst layers to which the fibrous material has been added.

The present invention aims to provide a polymer electrolyte fuel cell using electrocatalyst layers containing a fibrous material, which has high initial power generation performance and can improve durability.

### [Solution to Problems]

As a result of diligent studies, we discovered that by introducing multiple fibrous materials into the electrocatalyst layers, proton conductivity and electronic conductivity can both be achieved. Furthermore, it was found that when the content of the multiple fibrous materials is within a predetermined range, durability can be significantly improved while maintaining high initial power generation performance.

In order to solve the above issues, an aspect of the present invention provides an electrocatalyst layer that is usable in contact with a polyelectrolyte membrane, including catalyst-supporting particles, polyelectrolyte containing fluorine atoms, and two or more types of fibrous materials, wherein the catalyst-supporting particles each contain a support and a catalyst supported by the support; the fibrous materials contain at least one type of a conductive fibrous material and at least one type of a non-conductive fibrous material; and when a content of the supports is 100 parts by mass, a content of the conductive fibrous material is 5 parts by mass or more and 50 parts by mass or less, and a content of the non-conductive fibrous material is 5 parts by mass or more and 20 parts by mass or less.

The conductive fibrous material may comprise carbon fibers.

The non-conductive fibrous material may comprise high molecular weight polymer fibers.

The high molecular weight polymer fibers may have a basic functional group in a molecular structure thereof.

The basic functional group may contain nitrogen.

The non-conductive fibrous material may comprise high molecular weight polymer fibers having an imide structure or an azole structure.

Another aspect of the present invention provides a membrane electrode assembly including: a polyelectrolyte membrane, and two electrocatalyst layers provided on respective surfaces of the polyelectrolyte membrane in a thickness direction thereof, wherein at least one of the two electrocatalyst layers is the electrocatalyst layer according to an embodiment of the present invention.

Another aspect of the present invention provides a polymer electrolyte fuel cell including the membrane electrode assembly according to an aspect of the present invention; two gas diffusion layers disposed on respective surfaces of the membrane electrode assembly in a thickness direction thereof; and two separators facing each other sandwiching the membrane electrode assembly and the two gas diffusion layers.

### [Advantageous Effects of the Invention]

According to the present invention, it is expected that, if the contents of the plurality of fibrous materials in an electrocatalyst layer are within predetermined ranges, the polymer electrolyte fuel cell can achieve high initial power generation performance, while improving durability.

### [Brief Description of the Drawings]

Fig. 1 is a cross-sectional view illustrating a membrane electrode assembly according to an embodiment.
Fig. 2 is a schematic diagram illustrating a structure of an electrocatalyst layer constituting a membrane electrode assembly according to an embodiment.
Fig. 3 is a cross-sectional view illustrating a structure of a catalyst-supporting particle contained in an electrocatalyst layer according to an embodiment.
Fig. 4 is an exploded perspective view illustrating a polymer electrolyte fuel cell according to an embodiment.

### [Description of the Embodiments]

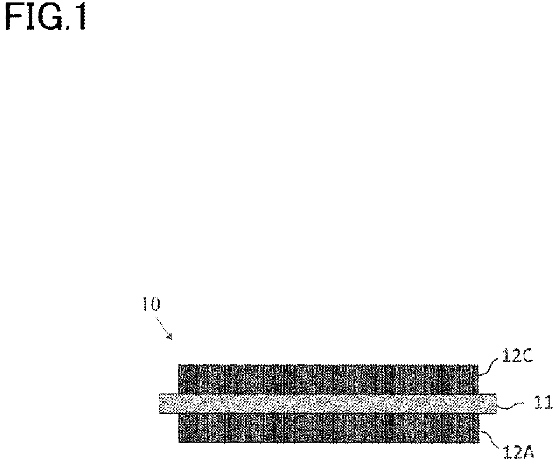

Referring to Figs. 1 to 4, an embodiment of an electrocatalyst layer, a membrane electrode assembly, and a polymer electrolyte fuel cell will be described. For ease of understanding, the drawings are illustrated in an exaggerated manner as appropriate. The configurations and materials of the electrocatalyst layer, membrane electrode assembly, polymer electrolyte fuel cell, and their production methods of the present invention should not be construed as being limited to the configurations and materials described below, but should encompass all materials and configurations that are presumed to have similar functions.

### [Membrane electrode assembly]

As shown in Fig. 1, a membrane electrode assembly 10 includes a polyelectrolyte membrane 11, a cathode-side electrocatalyst layer 12C, and an anode-side electrocatalyst layer 12A.

The polyelectrolyte membrane 11 is a solid polyelectrolyte membrane. For example, the polyelectrolyte membrane 11 is made of a polymer material having proton conductivity. Examples of the polymer material having proton conductivity include fluororesins and hydrocarbon resins. Examples of the fluororesins include Nafion (manufactured by DuPont, registered trademark), Flemion (manufactured by AGC Inc., registered trademark), and Gore-Select (manufactured by Gore, registered trademark). Examples of the hydrocarbon resins include engineering plastics, and engineering plastics into which a sulfonic acid group has been introduced.

The cathode-side electrocatalyst layer 12C is an electrocatalyst layer constituting an air electrode as a cathode and is bonded to one surface of the polymer electrode membrane 11. The cathode-side electrocatalyst layer 12C oxidizes the protons transported through the polyelectrolyte membrane 11 with an oxidant containing oxygen, and receives electrons from external circuits.

The anode-side electrocatalyst layer 12A is an electrocatalyst layer constituting a fuel electrode as an anode and is bonded a surface of the polymer electrode membrane 11 facing away from the surface to which the cathode-side electrocatalyst layer 12C is bonded. The anode-side electrocatalyst layer 12A separates the fuel gas into protons and electrons.

In the following description, the cathode-side electrocatalyst layer 12C and the anode-side electrocatalyst layer 12A may each be simply referred to as electrocatalyst layer.

### [Electrocatalyst layer]

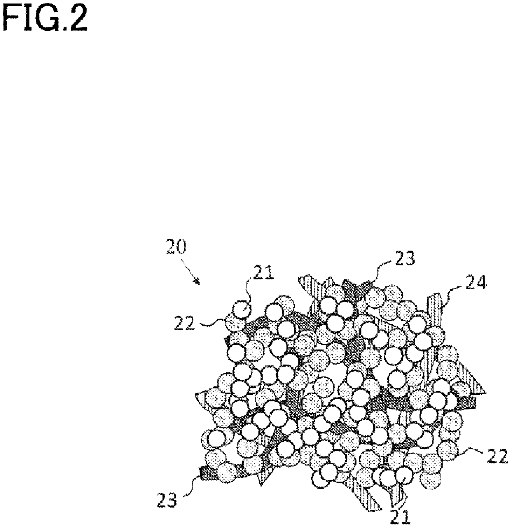

The cathode-side electrocatalyst layer 12C and the anode-side electrocatalyst layer 12A constituting the membrane electrode assembly 10 are both electrocatalyst layers 20 having the structure shown in Fig. 2 (hereinafter, these layers may also be each referred to as first electrocatalyst layer). It should be noted that either of the cathode- and anode-side electrocatalyst layers 12C and 12A may be the first electrocatalyst layer 20, and the other may be an electrocatalyst layer having a structure different from the structure shown in Fig. 2 (hereinafter, this layer is referred to as second electrocatalyst layer).

That is, if either of the cathode- and anode-side electrocatalyst layers 12C and 12A is the first electrocatalyst layer, the effect of improving initial power generation performance and durability can be achieved. From the perspective of enhancing the above effect, if only one of the cathode- and anode-side electrocatalyst layers 12C and 12A is to be the first electrocatalyst layer, it is preferred that the cathode-side electrocatalyst layer 12C constituting the air electrode is the first electrocatalyst layer.

### (First electrocatalyst layer)

As shown in Fig. 2, the first electrocatalyst layer 20 comprises catalyst-supporting particles 21, a polyelectrolyte 22, a conductive fibrous material 23, and a non-conductive fibrous material 24. The first electrocatalyst layer 20 may comprise other known components contained in electrocatalyst layers of fuel cells, as arbitrary components.

### <Catalyst-supporting particles>

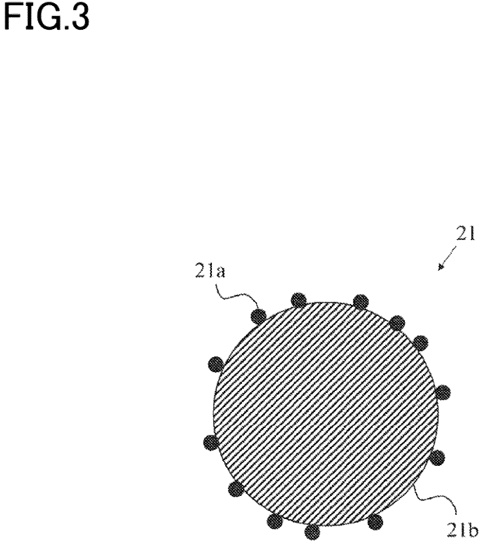

As shown in Fig. 3, each catalyst-supporting particle 21 comprises a catalyst 21a, and a support 21b supporting the catalyst 21a.

Examples of the catalyst 21a that can be used include platinum group metals, metals other than the platinum group metals, and their alloys, oxides, composite oxides, and carbides. Examples of the platinum group metals include platinum, palladium, ruthenium, iridium, rhodium, and osmium. Examples of the metals other than the platinum group metals include gold, iron, lead, copper, chromium, cobalt, nickel, manganese, vanadium, molybdenum, gallium, and aluminum. Of these metals, platinum, gold, palladium, rhodium, ruthenium, and alloys thereof are preferred because they have high catalytic activity.

The catalyst 21a constituting the catalyst-supporting particles 21 may be only one of the types shown in the example, or may be a combination of two or more of them.

For example, the catalyst 21a is preferred to have an average particle size of 0.5 nm or more and 20 nm or less, and more preferred to be 1 nm or more and 5 nm or less. If the average particle size of the catalyst 21a is 0.5 nm or more, decrease in stability can be suppressed. If the average particle size of the catalyst 21a is 20 nm or less, decrease in activity can be suppressed. In the present specification, the average particle size calculated from particle size measurement is defined to be an average particle size.

As the supports 21b, a material that is electrically conductive, not corroded by the catalyst 21a, and capable of supporting the catalyst 21a is used. Examples of the material constituting the supports 21b include carbon materials such as carbon black, graphite, black lead, activated carbon, carbon nanotubes, carbon nanofibers, and fullerenes.

The supports 21b constituting the catalyst-supporting particles 21 may be only one of the types shown in the example, or may be a combination of two or more of them.

The shape of the supports 21b is not specifically limited but may be, for example, in the form of particles or fibers. From the perspective of smoothly transferring the electrons generated on the surfaces of the catalyst 21a to the outside of the system, the supports 21b are preferred to have a shape capable of supporting the catalyst 21a on the outer surfaces thereof.

For example, the supports 21b are preferred to have an average particle size of 10 nm or more and 1,000 nm or less, and more preferred to be 10 nm or more and 100 nm or less. If the average particle size of the supports 21b is 10 nm or more, the electron conduction path can be easily formed in the electrocatalyst layer. If the average particle size of the supports 21b is 1,000 nm or less, resistance increase due to the increase in thickness of the first electrocatalyst layer 20 can be suppressed.

### <Polyelectrolyte>

A proton conductive material is used for the polyelectrolyte 22. Examples of the material having proton conductivity include fluorinated polyelectrolytes and hydrocarbon-based polyelectrolytes. Examples of the fluorinated polyelectrolytes include those having a tetrafluoroethylene skeleton as represented by Nafion (registered trademark) manufactured by Du Pont. Examples of the hydrocarbon-based polyelectrolytes include sulfonated polyether ketone, sulfonated polyether sulfone, sulfonated polyether ether sulfone, sulfonated polysulfide, and sulfonated polyphenylene.

The polyelectrolyte 22 constituting the first electrocatalyst layer 20 may be only one of the types shown in the example, or may be a combination of two or more of them.

The content of the polyelectrolyte in the first electrocatalyst layer 20 is preferred to be, for example, 40 parts by mass or more and 140 parts by mass or less when the content of the supports 21b in the first electrocatalyst layer 20 is assumed to be 100 parts by mass.

If the content of the polyelectrolyte is 40 parts by mass or more, deterioration in proton conductivity due to the defects in the proton conduction path can be suppressed. Consequently, the balance between proton conductivity and electron conductivity can be easily secured in the first electrocatalyst layer 20. If the content of the polyelectrolyte is 140 parts by mass or less, the catalyst 21a of the catalyst-supporting particles 21 can be favorably exposed. Consequently, catalytic activity is improved in the first electrocatalyst layer 20.

### <Fibrous material>

The conductive fibrous material 23 is preferred to be a material which is not affected by the catalyst 21a and the polyelectrolyte 22 and has conductivity, e.g., carbon fibers. Examples of the carbon fibers include vapor grown carbon fibers (VGCFs) and carbon nano-tubes (CNTs). Due to the presence of the conductive fibrous material 23, cracks are less likely to occur in the electrocatalyst layers and physical durability is improved. Furthermore, since the conductive fibrous material assists the electron conduction path in the first electrocatalyst layer, electrical durability is also improved.

The non-conductive fibrous material 24 is preferred to be a material which is not affected by the catalyst 21a and the polyelectrolyte 22, e.g., high molecular weight polymer fibers. Examples of the high molecular weight polymer fibers include high molecular weight nanofibers of amines having an imide structure, azole structure, etc.

The non-conductive fibrous material 24 may contain a basic functional group in the molecular structure of the material. Thus, the polyelectrolyte 22 can be easily present in the vicinity of the non-conductive fibrous material 24. The non-conductive fibrous material 24 having a basic functional group may include high molecular weight polymer fibers having an imide structure, azole structure, etc. The azole structure refers to a five-membered heterocyclic structure containing one or more nitrogen atoms, e.g., an imidazole structure and oxazole structure. The non-conductive fibrous material is preferred to be high molecular weight polymer fibers having a benzazole structure such as a benzimidazole structure and benzoxazole structure. Specific examples of the high molecular weight polymer include polymers such as polybenzimidazole and polybenzoxazole.

If the non-conductive fibrous material 24 contains a basic functional group, an acidic proton-conducting site such as a sulfonyl group contained in the polyelectrolyte 22 may be bound by an acid base so that the polyelectrolyte 22 can be easily present in the vicinity of the non-conductive fibrous material 24. Since the acid base bonds are stronger than hydrogen bonds, the non-conductive fibrous material 24 is preferred to contain a basic functional group.

Acidic functional group may include carbonyl groups, and the basic functional group may include amine groups including pyridine, imide and azole structures.

That is, if the non-conductive fibrous material 24 has a basic functional group containing nitrogen atoms in the molecular structure, the polyelectrolyte 22 can be easily present in the vicinity.

The shapes of the conductive fibrous material 23 and the non-conductive fibrous material 24 are not specifically limited but may, for example, have hollow structures or solid structures.

The conductive fibrous material 23 and the non-conductive fibrous material 24 constituting the first electrocatalyst layer 20 may each be only one of the types shown in the example, or may be a combination of two or more of them.

In fuel cells, the amount of product water produced in the electrocatalyst layers as a result of the cell reaction is proportional to the amount of chemical reaction. Therefore, if power is generated at high current density, the amount of product water increases. If this product water is not sufficiently discharged to the outside of the electrocatalyst layers, the product water retained therein may block the gas diffusion path. In this case, flooding may occur which is a phenomenon in which the reaction gas cannot reach the active sites and the power generation performance is significantly reduced.

By using the conductive fibrous material 23 and the non-conductive fibrous material 24 as the constituent materials of the first electrocatalyst layer 20, an appropriate amount of space is secured within the first electrocatalyst layer 20, which also has the effect of promoting discharge of the product water.

The content of the conductive fibrous material 23 in the first electrocatalyst layer 20 is preferred to be 5 parts by mass or more and 50 parts by mass or less when the content of the supports 21b in the first electrocatalyst layer 20 is assumed to be 100 parts by mass.

If the content of the conductive fibrous material 23 is 5 parts by mass or more, a network is formed in the conductive fibrous material 23 and the electrocatalyst layer can be easily formed. Thus, the electron conduction path can be sufficiently established in the electrocatalyst layer and the structural strength of the electrocatalyst layer can be sufficiently reinforced. Consequently, power generation performance and durability of the fuel cell are improved. If the content of the conductive fibrous material 23 is 50 parts by mass or less, resistance increase due to the increase in thickness of the first electrocatalyst layer 20 can be suppressed.

The content of the non-conductive fibrous material 24 in the first electrocatalyst layer 20 is preferred to be 5 parts by mass or more and 20 parts by mass or less when the content of the supports 21b in the first electrocatalyst layer 20 is assumed to be 100 parts by mass.

If the content of the non-conductive fibrous material 24 is 5 parts by mass or more, a network is formed in the non-conductive fibrous material 24 and the electrocatalyst layer can be easily formed. Thus, the proton conduction paths can be sufficiently established in the electrocatalyst layer and the structural strength of the electrocatalyst layer can be sufficiently reinforced. Consequently, power generation performance of the fuel cell is improved. If the content of the non-conductive fibrous material 24 is 20 parts by mass or less, resistance increase due to the increase in thickness of the first electrocatalyst layer 20 can be suppressed.

### (Second electrocatalyst layer)

Any known electrocatalyst layer applied to membrane electrode assemblies can be used as the second electrocatalyst layer. The second electrocatalyst layer may be, for example, an electrocatalyst layer which is different from the first electrocatalyst layer 20 in that no high molecular weight fibers (non-conductive fibrous material) are contained, but is similar to the first electrocatalyst layer 20 in the remaining configuration.
Regarding the above materials used as the components of the first and second electrocatalyst layers, the material used for the cathode-side electrocatalyst layer 12C may be the same as the material used for the anode-side electrocatalyst layer 12A, or may be at least partially different.

### [Polymer electrolyte fuel cell]

Next, a configuration of a polymer electrolyte fuel cell including the membrane electrode assembly 10 will be described. In the following, a single-cell polymer electrolyte fuel cell will be described as an example of the polymer electrolyte fuel cell. The polymer electrolyte fuel cell should not be construed as being limited to a single-cell configuration, but may include a plurality of cell units, and these cell units may be laminated together.

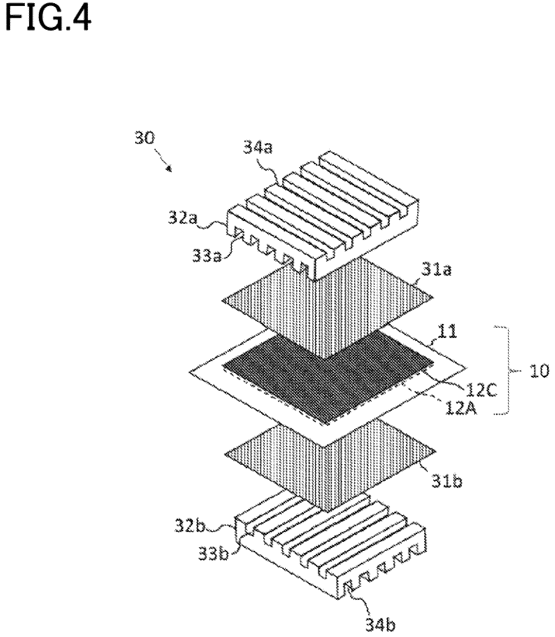

As shown in Fig. 4, a polymer electrolyte fuel cell 30 includes the membrane electrode assembly 10, two gas diffusion layers 31a and 31b, and two separators 32a and 32b.

The gas diffusion layers 31a and 31b are layers for uniformly diffusing the reaction gas. The gas diffusion layer 31a is disposed facing the cathode-side electrocatalyst layer 12C of the membrane electrode assembly 10. The gas diffusion layer 31b is disposed facing the anode-side electrocatalyst layer 12A of the membrane electrode assembly 10. The two gas diffusion layers 31a and 31b sandwich the membrane electrode assembly 10 therebetween in the thickness direction of the membrane electrode assembly 10.

The cathode-side electrocatalyst layer 12C and the gas diffusion layer 31a form an air electrode serving as a cathode. The anode-side electrocatalyst layer 12A and the gas diffusion layer 31b form a fuel electrode serving as an anode.

The gas diffusion layers 31a and 31b are made of a material having electron conductivity and gas diffusibility. For example, the material constituting the gas diffusion layers 31a and 31b may be a porous carbon material. Examples of the porous carbon material include carbon cloth, carbon paper, and non-woven fabric.

The separators 32a and 32b are members having a function of extracting electrons to the external circuits, and are disposed on the outside of the gas diffusion layer 31b. The two separators 32a and 32b sandwich the membrane electrode assembly 10 and the two gas diffusion layers 31a and 31b therebetween in the thickness direction of the membrane electrode assembly 10.

The separators 32a and 32b respectively include gas channels 33a and 33b and cooling water channels 34a and 34b. The gas channels 33a and 33b are channels for passing a reaction gas and are respectively formed on the surfaces of the separators 32a and 32b facing the gas diffusion layers 31a and 31b. The cooling water channels 34a and 34b are channels for passing cooling water and are respectively formed on the surfaces of the separators 32a and 32b facing away from the surfaces facing the gas diffusion layers 31a and 31b.

The separators 32a and 32b are made of a material which is electrically conductive and impermeable to gases. Examples of the material constituting the separators 32a and 32b include carbon materials and metal materials. It is preferred that the material constituting the separators 32a and 32b has some degree of strength and good formability.

An oxidant gas is supplied as a reaction gas to the gas channel 33a of the separator 32a facing the gas diffusion layer 31a constituting the air electrode. For example, the oxidant gas may be air or oxygen gas. A fuel gas is supplied as a reaction gas to the gas channel 33b of the separator 32b facing the gas diffusion layer 31b constituting the fuel electrode. For example, the fuel gas may be hydrogen gas.

In the polymer electrolyte fuel cell 30, a fuel gas containing hydrogen is supplied to the fuel electrode and an oxidant gas containing oxygen is supplied to the air electrode to respectively cause electrode reactions shown in the following Formulas 1 and 2 in the fuel electrode and the air electrode for generation of power. Polymer electrolyte fuel cells are used in combination with associated devices such as gas supply devices and cooling devices.

Fuel electrode: H₂ → 2H⁺ + 2e⁻... (Formula 1)

Air electrode: 1/2O₂ + 2H⁺ + 2e⁻ → H₂O... (Formula 2)

### [Method of producing membrane electrode assembly]

A method of producing the membrane electrode assembly 10 will be described below.

The method of producing the membrane electrode assembly 10 includes a step of preparing a catalyst ink, and a step of forming electrocatalyst layers using the catalyst ink.

### (Ink preparation step)

In the ink preparation step, the components constituting the electrocatalyst layer are mixed with each other using a disperse medium to prepare a catalyst ink.

The disperse medium is not specifically limited as long as it can disperse the components constituting the electrocatalyst layer. Examples of the disperse medium include water, alcohols, ketones, and mixtures thereof. Specific examples that can be appropriately used include water, alcohols such as methanol, ethanol, 1-propanol, 2-propanol, 1-butanol, 2-butanol, isobutyl alcohol, and tert-butyl alcohol, and ketones such as acetone, methyl ethyl ketone, methyl propyl ketone, methyl butyl ketone, methyl isobutyl ketone, methyl amyl ketone, pentanone, heptanone, cyclohexanone, methylcyclohexanone, acetonylacetone, diethyl ketone, dipropyl ketone, and diisobutyl ketone.

The catalyst ink may contain a dispersant for good dispersion of each component constituting the electrocatalyst layer. Examples of the dispersant include anionic surfactants, cationic surfactants, amphoteric surfactants, and nonionic surfactants.

Examples of the anionic surfactants include carboxylic acid surfactants such as alkyl ether carboxylates, ether carboxylates, alkanoyl sarcosines, alkanoyl glutamates, acyl glutamates, oleic acid/N-methyl taurine, potassium oleate/diethanolamine salt, alkyl ether sulfates/triethanolamine salts, polyoxyethylene alkyl ether sulfates/triethanolamine salts, amine salts of specially modified polyether ester acids, amine salts of higher fatty acid derivatives, amine salts of specially modified polyester acids, amine salts of high molecular weight polyether ester acids, amine salts of specially modified phosphate esters, amidoamine salts of high molecular weight polyester acids, amidoamine salts of special fatty acid derivatives, alkylamine salts of higher fatty acids, amidoamine salts of high molecular weight polycarboxylic acids, sodium laurate, sodium stearate, and sodium oleate; sulfonic acid surfactants such as dialkyl sulfosuccinate, dialkyl sulfosuccinate salts, 1,2-bis(alkoxycarbonyl)-1-ethanesulfonate, alkylsulfonates, alkylsulfonate salts, paraffin sulfonate, α-olefin sulfonate, linear alkylbenzene sulfonates, alkylbenzene sulfonates, polynaphthyl methane sulfonate, polynaphthyl methanesulfonate salt, naphthalenesulfonate-formaldehyde condensates, alkylnaphthalenesulfonates, alkanoylmethyl taurides, lauryl ether sulfate, cetyl sulfate sodium salt, sodium stearyl sulfate, sodium oleyl sulfate, lauryl ether sulfate, sodium alkylbenzene sulfonate, oil-soluble alkylbenzene sulfonates, and α-olefin sulfonate; sulfate ester surfactants such as alkyl sulfate ester salts, alkyl sulfate salts, alkyl sulfates, alkyl ether sulfates, polyoxyethylene alkyl ether sulfates, alkyl polyethoxy sulfates, polyglycol ether sulfate, alkyl polyoxyethylene sulfates, sulfated oils, and highly sulfated oils; and phosphate ester surfactants such as phosphate (mono- or di-)alkyl salts, (mono- or di-)alkyl phosphates, (mono- or di-)alkyl phosphate ester salts, alkyl polyoxyethylene phosphate salts, alkyl ether phosphates, alkyl polyethoxy phosphate salts, polyoxyethylene alkyl ethers, alkylphenyl phosphate polyoxyethylene salts, alkyl phenyl ether phosphates, alkyl phenyl polyethoxy phosphate salts, polyoxyethylene alkyl phenyl ether phosphates, higher alcohol phosphate monoester disodium salts, higher alcohol phosphate diester disodium salts, and zinc dialkyl dithiophosphates.

Examples of the cationic surfactants include benzyldimethyl{2-[2-(P-1,1,3,3-tetramethylbutylphenoxy)ethoxy]ethyl}ammonium chloride, octadecylamine acetate, tetradecylamine acetate, octadecyltrimethylammonium chloride, beef tallow trimethylammonium chloride, dodecyltrimethylammonium chloride, coconut trimethylammonium chloride, hexadecyltrimethylammonium chloride, behenyltrimethylammonium chloride, coconut dimethylbenzylammonium chloride, tetradecyldimethylbenzylammonium chloride, octadecyldimethylbenzylammonium chloride, dioleyldimethylammonium chloride, 1-hydroxyethyl-2-beef tallow imidazoline quaternary salts, 2-heptadecenyl-hydroxyethyl imidazoline, stearamidoethyl diethylamine acetate, stearamidoethyl diethylamine hydrochloride, triethanolamine monostearate formate, alkyl pyridinium salts, higher alkylamine ethylene oxide adduct, polyacrylamide amine salts, modified polyacrylamide amine salts, and perfluoroalkyl quaternary ammonium iodides.

Examples of the amphoteric surfactants include dimethylcocobetaine, dimethyllauryl betaine, sodium lauryl aminoethyl glycine, sodium lauryl aminopropionate, stearyldimethylbetaine, lauryl dihydroxyethyl betaine, amidobetaine, imidazolium betaine, lecithin, 3-[ω-fluoroalkanoyl-N-ethylamino]-1-sodium propanesulfonate, and N-[3-(perfluorooctane sulfonamide) propyl-N, N-dimethyl-N-carboxymethylene ammonium betaine.

Examples of the nonionic surfactants include coconut fatty acid diethanolamide (1:2 type), coconut fatty acid diethanolamide (1:1 type), bovine fatty acid diethanolamide (1:2 type), bovine fatty acid diethanolamide (1:1 type), oleic acid diethanolamide (1:1 type), hydroxyethyl lauryl amine, polyethylene glycol laurylamine, polyethylene glycol coconut amine, polyethylene glycol stearylamine, polyethylene glycol beef tallow amine, polyethylene glycol beef tallow propylene diamine, polyethylene glycol dioleylamine, dimethyllaurylamine oxide, dimethylstearylamine oxide, dihydroxyethyllaurylamine oxide, perfluoroalkylamine oxides, polyvinylpyrrolidone, higher alcohol ethylene oxide adducts, alkylphenol ethylene oxide adducts, fatty acid ethylene oxide adducts, polypropylene glycol ethylene oxide adduct, fatty acid esters of glycerin, fatty acid esters of pentaerythrite, fatty acid ester of sorbitol, fatty acid esters of sorbitan, and fatty acid esters of sugars.

Of the surfactants mentioned above, the sulfonic acid type surfactants, such as alkylbenzene sulfonic acids, oil-soluble alkylbenzene sulfonic acids, α-olefin sulfonic acids, sodium alkylbenzene sulfonates, oil-soluble alkylbenzene sulfonates, and α-olefin sulfonates are preferred to be used as a dispersant, from the perspective of having good carbon dispersion effect and being less likely to change the catalytic performance due to residual dispersant.

The dispersion method in the preparation step is not specifically limited as long as the components contained in the catalyst ink can be dispersed by the method, and a known dispersion method can be used. Example of the known dispersion method include methods using a planetary ball mill, bead mill, and ultrasonic homogenizer. The mixing ratio of the components and disperse medium in the catalyst ink can be appropriately selected according to coatability or power generation performance required.

### (Formation step)

In the formation step, the catalyst ink obtained in the preparation step is applied to the substrate, followed by drying to volatilize the disperse medium and obtain a coated film of an electrocatalyst layer. The substrate may be the polyelectrolyte membrane 11, transfer substrate, or gas dispersion layers 31a, 31b.
The coating method used for applying the catalyst ink to the substrate is not specifically limited but may be a known coating method of applying a slurry mixture onto a substrate with a uniform thickness. Examples of the known coating method include die coating, bar coating, spray coating, dip coating, and screen printing. Of these coating methods, die coating is preferred to be used from the perspective of allowing a catalyst ink having a relatively wide viscosity range to be applied, and being able to apply the ink with high uniformity in film thickness.

The drying method used for drying is not specifically limited as long as the disperse medium can be volatilized by the method, and a known drying method can be used such as a method using an oven, hot plate, or far infrared rays. The temperature and time of drying can be appropriately selected according to the materials used for the electrocatalyst layer and the substrate. If a transfer substrate is used as the substrate, a process of transferring the electrocatalyst layer formed on the transfer substrate to the polyelectrolyte membrane 11 is performed. In this case, the transfer method may be, for example, a thermocompression transfer method.

The transfer substrate is not specifically limited as long as the electrocatalyst layer formed can be separated and transferred to the polyelectrolyte membrane. The transfer substrate may be, for example, a fluororesin film. Fluororesin films have good transferability. Examples of the fluororesin constituting the fluororesin film include ethylene tetrafluoroethylene copolymer (ETFE), tetrafluoroethylene-hexafluoropropylene copolymer (FEP), tetrafluoroperfluoroalkyl vinyl ether copolymer (PFA), and polytetrafluoroethylene (PTFE).

If the polyelectrolyte membrane 11 or a transfer substrate is used as the transfer substrate, a membrane electrode assembly 10 can be obtained by providing the electrocatalyst layers to respective surfaces of the polyelectrolyte membrane 11. The obtained membrane electrode assembly 10, the gas diffusion layers 31a and 31b, and the separators 32a, 32b are laminated together to obtain a polymer electrolyte fuel cell 30.

If the gas diffusion layers 31a and 31b are used as the transfer substrates, a membrane electrode assembly 10 having gas diffusion layers 31a and 31b can be obtained by laminating the polyelectrolyte membrane 11 with the gas diffusion layers 31a and 31b on which the respective electrocatalyst layers are formed. The separators 32a and 32b are laminated to the obtained membrane electrode assembly 10 to obtain a polymer electrolyte fuel cell 30.

The electrocatalyst layer production method when producing a cathode-side electrocatalyst layer 12C may be the same as or different from the electrocatalyst layer production method when producing an anode-side electrocatalyst layer 12A.

### Examples

The present embodiment will be more specifically described below by way of examples and comparative examples. The present invention should not be construed as being limited to the configurations of the following examples.

### [No. 1 (Example)]

First, catalyst-supporting particles, a polyelectrolyte, a conductive fibrous material, a non-conductive fibrous material, and a disperse medium were mixed together and the mixture was subjected to dispersion treatment to prepare a catalyst ink.

The amount of the polyelectrolyte was 70 parts by mass relative to 100 parts by mass of the support content of the catalyst-supporting particles (hereinafter this is referred to as the amount of catalyst-supporting particles in terms of supports). The amount the conductive fibrous material was 5 parts by mass relative to 100 parts by mass of the amount of catalyst-supporting particles in terms of supports. The amount of the non-conductive fibrous material was 5 parts by mass relative to 100 parts by mass of the amount of catalyst-supporting particles in terms of supports.
The amount of the disperse medium was set so that the solids concentration of the catalyst ink was 10 mass%. The dispersion treatment was performed using zirconia balls having a diameter of 3 mm and a planetary ball mill for 60 minutes at a rotation speed of 600 min⁻¹ (rpm).

Details of the components used for the catalyst ink are as follows.
Catalyst-supporting particles: Platinum-supported carbon catalyst (carbon:platinum = 1:1, mass ratio)
Polyelectrolyte: Fluorine-based polyelectrolyte (dispersion liquid of Nafion (registered trademark) manufactured by FUJIFILM Wako Pure Chemical Corporation)
Conductive fibrous material: Carbon fibers (VGCF-H manufactured by Showa Denko Packaging Co., Ltd.)
   Non-conductive fibrous material: Azole structure-containing high molecular weight polymer fibers (fiber diameter 300 nm x fiber length 10 µm)
Disperse medium: Mixture of water and 1-propanol in a mass ratio of 1:1

Next, the prepared catalyst ink was applied to one surface of a polyelectrolyte membrane (Nafion (trademark) 211 manufactured by Dupont) using a die coater to form a rectangular coating film measuring 50 mm in length and 50 mm in width. The amount of the catalyst ink applied was set so that the amount of platinum support was 0.3 mg/cm². Next, the disperse medium contained in the coating film was volatilized in an oven heated to 80°C to form a cathode-side electrocatalyst layer.

Next, the prepared catalyst ink was applied to the surface of the polyelectrolyte membrane facing away from the surface on which the cathode-side electrocatalyst layer was formed to form a rectangular coating film measuring 50 mm in length and 50 mm in width. The amount of the catalyst ink applied was set so that the amount of platinum support was 0.1 mg/cm². Next, the disperse medium contained in the coating film was volatilized in an oven heated to 80°C to form an anode-side electrocatalyst layer, thereby obtaining a membrane electrode assembly of Example 1.

### [No. 2 (Example)]

A membrane electrode assembly No. 2 was obtained in a manner similar to No. 1, except that the amount of the non-conductive fibrous material was 20 parts by mass relative to 100 parts by mass of the amount of catalyst-supporting particles in terms of supports.

### [No. 3 (Example)]

A membrane electrode assembly No. 3 was obtained in a manner similar to No. 1, except that the amount of the conductive fibrous material was 50 parts by mass relative to 100 parts by mass of the amount of catalyst-supporting particles in terms of supports.

### [No. 4 (Example)]

A membrane electrode assembly No. 4 was obtained in a manner similar to No. 1, except that the amount of the conductive fibrous material was 50 parts by mass relative to 100 parts by mass of the amount of catalyst-supporting particles in terms of supports, and the amount of the non-conductive fibrous material was 20 parts by mass relative to 100 parts by mass of the amount of catalyst-supporting particles in terms of supports.

### [No. 5 (Example)]

A membrane electrode assembly No. 5 was obtained in a manner similar to No. 1, except that the amount the conductive fibrous material was 2 parts by mass relative to 100 parts by mass of the amount of catalyst-supporting particles in terms of supports.

### [No. 6 (Comparative Example)]

A membrane electrode assembly No. 6 was obtained in a manner similar to No. 1, except that the amount of the conductive fibrous material was 60 parts by mass relative to 100 parts by mass of the amount of catalyst-supporting particles in terms of supports.

### [No. 7 (Comparative Example)]

A membrane electrode assembly No. 7 was obtained in a manner similar to No. 1, except that the amount of the non-conductive fibrous material was 2 parts by mass relative to 100 parts by mass of the amount of catalyst-supporting particles in terms of supports.

### [No. 8 (Comparative Example)]

A membrane electrode assembly No. 8 was obtained in a manner similar to No. 1, except that the amount of the non-conductive fibrous material was 30 parts by mass relative to 100 parts by mass of the amount of catalyst-supporting particles in terms of supports.

### [No. 9 (Comparative Example)]

A membrane electrode assembly No. 9 was obtained in a manner similar to No. 1, except that the amount of the conductive fibrous material was 2 parts by mass relative to 100 parts by mass of the amount of catalyst-supporting particles in terms of supports, and the amount of the non-conductive fibrous material was 2 parts by mass relative to 100 parts by mass of the amount of catalyst-supporting particles in terms of supports.

### [No. 10 (Comparative Example)]

A membrane electrode assembly No. 10 was obtained in a manner similar to No. 1, except that the amount of the conductive fibrous material was 60 parts by mass relative to 100 parts by mass of the amount of catalyst-supporting particles in terms of supports, and the amount of the non-conductive fibrous material was 30 parts by mass relative to 100 parts by mass of the amount of catalyst-supporting particles in terms of supports.

### [Evaluation of initial power generation performance]

For each of the membrane electrode assemblies Nos. 1 to 10, two pieces of carbon paper serving as gas diffusion layers were bonded to the membrane electrode assembly so as to sandwich the assembly therebetween to prepare a sample. The samples were each set in a power generation evaluation cell, and current and voltage were measured using a fuel cell measurement device. The cell temperature during measurement was set to 80°C. The humidification conditions were established such that an anode side relative humidity was 90% RH and a cathode side relative humidity was 30% RH. Hydrogen was used as a fuel gas, and air was used as an oxidant gas. In this case, hydrogen was supplied at a flow rate achieving hydrogen utilization of 80%, and air was supplied at a flow rate achieving oxygen utilization of 40%. The back pressure was 50 kPa.

### [Evaluation of durability]

For measurement of durability, the same samples as those used for the evaluation of the initial power generation performance were used, and potential cycle testing described in the "Cell Evaluation and Analysis Protocol" published by the New Energy and Industrial Technology Development Organization (NEDO) was performed. Also, power generation evaluation was performed in the same manner as above before and after the potential cycle testing to evaluate the amount of voltage drop at a current density of 1.5 A/cm².

The initial power generation performance and durability of the membrane electrode assemblies measured are shown in Table 1. It should be noted that, by satisfying both of the voltage being 0.65 V or more at the current density of 1.5 A/cm², and the voltage drop being within 100 mV at the current density of 1.5 A/cm² after the durability testing, applicability to both passenger cars, where initial power generation performance is important, and commercial vehicles, where durability is important, can be achieved. Accordingly, in Table 1, the case of the voltage being 0.65 V or more at the current density of 1.5 A/cm² is evaluated to be Good, the case of the voltage being less than 0.65 V is evaluated to be Poor, the case of the voltage drop being within 100 mV at the current density of 1.5 A/cm² after the durability testing is evaluated to be Good, and the case of the voltage drop being 100 mV or more is evaluated to be Poor.

**[Table 1]**

| No. | Amount contained relative to 100 parts by mass of supports (parts by mass) | | Initial power generation performance | | Durability | |
|---|---|---|---|---|---|---|
| | Conductive fibrous material | Non-conductive fibrous material | Voltage @ 1.5 A/cm² [V] | Evaluation | Voltage drop @ 1.5 A/cm² [mV] | Evaluation |
| 1 | 5 | 5 | 0.671 | Good | 82 | Good |
| 2 | 5 | 20 | 0.661 | Good | 85 | Good |
| 3 | 50 | 5 | 0.657 | Good | 55 | Good |
| 4 | 50 | 20 | 0.652 | Good | 56 | Good |
| 5 | 2 | 5 | 0.670 | Good | 102 | Poor |
| 6 | 60 | 5 | 0.644 | Poor | 52 | Good |
| 7 | 5 | 2 | 0.646 | Poor | 90 | Good |
| 8 | 5 | 30 | 0.640 | Poor | 84 | Good |
| 9 | 2 | 2 | 0.644 | Poor | 105 | Poor |
| 10 | 60 | 30 | 0.643 | Poor | 50 | Good |

As shown in Table 1, good results were obtained for initial power generation performance and durability (applicability to both passenger cars, where initial power generation performance is important, and commercial vehicles, where durability is important, can be achieved) in Nos. 1 to 4 that satisfy an embodiment of the present invention (the content of the conductive fibrous material is 5 parts by mass or more and 50 parts by mass or less, and the content of the non-conductive fibrous material is 5 parts by mass or more and 20 parts by mass or less, relative to 100 parts by mass of the support content).

In No. 5 in which the content of the conductive fibrous material was less than 5 parts by mass, the required performance could not be achieved in terms of durability.

In No. 6 in which the content of the conductive fibrous material was more than 50 parts by mass, the required performance could not be achieved in terms of initial power generation.

In No. 7 in which the content of the non-conductive fibrous material was less than 5 parts by mass, the required performance could not be achieved in terms of initial power generation.

In No. 8 in which the content of the non-conductive fibrous material was more than 20 parts by mass, the predetermined level of initial power generation performance could not be reached.

In No. 9 in which the content of the conductive fibrous material was less than 5 parts by mass and the content of the non-conductive fibrous material was also less than 5 parts by mass, the required performance could not be achieved in terms of both of initial power generation and durability.

In No. 10 in which the content of the conductive fibrous material was more than 50 parts by mass and the content of the non-conductive fibrous material was more than 20 parts by mass, the required performance could not be achieved in terms of initial power generation.

From the results of Nos. 1 to 4, it was found that good power generation performance could be achieved if the contents of the conductive fibrous material and the non-conductive fibrous material matched the configuration of an aspect of the present invention. From the results of Nos. 5 and 9, it was found that good durability could not be achieved if the amount of the conductive fibrous material added was less than the amount in the configuration of an aspect of the present invention. From the results of Nos. 6, 7, 8 and 10, it was found that good power generation performance could not be achieved if the content of the conductive fibrous material was more than the content in the configuration of an aspect of the present invention, or if the content of the non-conductive fibrous material was outside the content in the configuration of an aspect of the present invention.

From this, the mechanism by which the effects are obtained is presumed to be as follows. The conductive fibrous material is contained to improve the electron conductivity in the electrocatalyst layer, while the non-conductive fibrous material is contained to improve the proton conductivity in the electrocatalyst layer. If the content of the conductive fibrous material is less than in the configuration of an aspect of the present invention, the electron conductivity of the supports deteriorating during durability testing cannot be compensated by the conductive fibrous material, consequently deteriorating durability. If the content of the conductive fibrous material is more than in the configuration of an aspect of the present invention, the electron conductivity can be compensated; however, the initial power generation performance is deteriorated due to the resistance which is caused by the excessive thickness increase of the film.

On the other hand, if the content of the non-conductive fibrous material is less than in the configuration of an aspect of the present invention, it is not possible to assist proton conductivity, consequently deteriorating the initial power generation performance. If the content of the non-conductive fibrous material is more than in the present embodiment, the initial power generation performance is deteriorated due to resistance which is due to the excessive thickness increase of the film. That is, it is considered that, if the contents of the conductive fibrous material and the non-conductive fibrous material match the configuration of an aspect of the present invention, it is possible to appropriately assist electron conductivity and proton conductivity, and this may lead to satisfying both the initial power generation performance and durability.

As described above, it has been shown that, if the contents of the plurality of fibrous materials in an electrocatalyst layer are within the ranges shown in the configuration of an aspect of the present invention, high initial power generation performance can be achieved, and durability can be improved.

### [Reference Signs List]

10 ... Membrane electrode assembly
11 ... Polyelectrolyte membrane
12C ... Cathode-side electrocatalyst layer
12A ... Anode-side electrocatalyst layer
20 ... First electrocatalyst layer
21 ... Catalyst-supporting particle
21a ... Catalyst
21b ... Support
22 ... Polyelectrolyte
23 ... Conductive fibrous material
24 ... Non-conductive fibrous material
30 ... Polymer electrolyte fuel cell
31a, 31b ... Gas diffusion layer
32a, 32b ... separator
33a, 33b ... Gas channel
34a, 34b ... Cooling water channel

## Claims

1. An electrocatalyst layer that is usable in contact with a polyelectrolyte membrane, comprising
catalyst-supporting particles, polyelectrolyte containing fluorine atoms, and two or more types of fibrous materials, wherein
the catalyst-supporting particles each contain a support and a catalyst supported by the support;
the fibrous materials contain at least one type of a conductive fibrous material and at least one type of a non-conductive fibrous material; and
when a content of the supports is 100 parts by mass, a content of the conductive fibrous material is 5 parts by mass or more and 50 parts by mass or less, and a content of the non-conductive fibrous material is 5 parts by mass or more and 20 parts by mass or less.

2. The electrocatalyst layer according to claim 1, wherein the conductive fibrous material comprises carbon fibers.

3. The electrocatalyst layer according to claim 1 or 2, wherein the non-conductive fibrous material comprises high molecular weight polymer fibers.

4. The electrocatalyst layer according to claim 3, wherein the high molecular weight polymer fibers have a basic functional group in a molecular structure thereof.

5. The electrocatalyst layer according to claim 4, wherein the basic functional group contains nitrogen.

6. The electrocatalyst layer according to claim 1 or 2, wherein the non-conductive fibrous material comprises high molecular weight polymer fibers having an imide structure or an azole structure.

7. A membrane electrode assembly comprising:
a polyelectrolyte membrane; and two electrocatalyst layers provided on respective surfaces of the polyelectrolyte membrane in a thickness direction thereof, wherein
at least one of the two electrocatalyst layers is the electrocatalyst layer according to any one of claims 1 to 6.

8. A polymer electrolyte fuel cell comprising
the membrane electrode assembly according to claim 7;
two gas diffusion layers disposed on respective surfaces of the membrane electrode assembly in a thickness direction thereof; and
two separators facing each other sandwiching the membrane electrode assembly and the two gas diffusion layers.
